# EUROPEAN PATENT APPLICATION

(11) **EP 3 181 502 A1**
(43) Date of publication of application: **21.06.2017**
(21) Application number: 16460065.2
(22) Date of filing: 11.09.2016
(51) Int. Cl.: B65H 75/42, B60P 3/035, B60P 3/14, H02G 1/06

(54) **SERVICE VEHICLE**

(30) Priority: 14.12.2015 PL 41530315
(71) Applicant: "ALUMAST" SPOLKA AKCYJNA, 44-300 Wodzislaw Slaski (PL)
(72) Inventor: Szkopek, Zbigniew, 44-373 Wodzislaw Slaski (PL); Szymanek, Karol, 44-373 Wodzislaw Slaski (PL)
(74) Representative: Korbela, Anna

(57) **Abstract**

The main element of the developer service vehicle is the two-axle chassis (1), on which is placed a flatbed (2), which has been equipped with some components and elements fixed permanently, relatively connected to it separately, relatively freely located on it. These mainly are: ultra-light, service poles (3), reusable service cable (4) and wiring compartment (5). The service poles (3) are made of polyester fibers, glass fibers, basalt fibers, polyester resins, epoxy resins, powdered glass, or relatively of composite, ie. a material having a heterogeneous structure composed of two or more mentioned components with slightly different properties. Whereas the reusable service cable (4) is wound on the reel, under which is laying the coiling mechanism with electrical drive, and the coiler machine is usually controlled by a wireless remote control, powered respectively by a battery or generator and provided with z self-cleaning device for the cable dirt arising during the winding of the cable on the re-el.

In the flatbed (2) are incorporated wire guides (6), which allowing routing on them the service cable (4) in orderly manner, and out of which at least one is the wire guide (6a) with brushes.

Service poles (3) may be one-piece poles or several-pieces poles, preferably two-pieces poles (3a), they may be also equipped with a base and constitute service poles (3b), as poles non-interfering in the ground.

## Description

The subject of the invention is a service vehicle, equipped with a set of equipment necessary to provide electricity to consumers during,ordinary MV (medium voltage), LV (low voltage) network failure and during planned power outages. It is also intended for use - especially by the power emergency crew - when there is the need to build service line, the so-called bypass, because it is a completely equipped device, which can be used to build such type of lines.

Are known, trailers and semi-trailers, whose element are repair facilities. From the Polish description of the invention titled "Road semi-trailer of the set for bimodal transport" P. 208,706 (application No. W. 361712, publ. 05/2011 VLO) is known road semi-trailer of the set for bimodal transport, which for rail driving is connected to rail cars through coupling device. This semi-trailer, characterized in that from the underneath of the semi-trailer frame in longitudinal axis near each end is equipped with a vertical pivot bolt and symmetrically spaced to the longitudinal axis of the frame guiding cavities with side sockets at the ends with the axes parallel to the longitudinal axis of the frame, wherein the pivot bolt, the guiding cavities and the side sockets cooperate with coupling devices of the rail cars.

It is also known a device titled "The vehicle, especially semi-trailer" presented in the Polish description of the invention P. 210010 (Application No. W.372102, publ. 11/2011). The subject of the invention described herein is a vehicle, e.g. semi-trailer adapted for driving on both road and railroad track. The semi-trailer comprises a towing vehicle which is pivotally connected to the trailer. The towing vehicle has a front unit with wheels for riding on rails and the rear unit with wheels for riding on rails, while the trailer comprises only one rear unit with wheels for riding on rails. At least one of the last two units contains a propulsion medium and one of these two units may consist of a carriage car that includes two axles. One or both mentioned units may be presented as uniaxial unit. All units with the wheels running on rails can move in the vertical direction to allow the placing of the vehicle on the track and lifting of the

The aim of the development of the invention is to create a universal vehicle, which is a complete device enabling removing malfunctions of electricity networks using this device only.

The essence of the service vehicle with chassis and flatbed placed on it, is based on that it is equipped with at least some of its fixed permanently, or connected to it separately, relatively components and elements freely located on it, which are: ultra-light, service poles, service cable reusable and wiring compartment, unstapling steel sheet, hooks, handles through, earthing probes, earthing wires and electrical outlets, battery or generator, as well as small fittings: lashings, rollers, tools, lighting mast, Kevlar service lashing, and also wire guides incorporated in the flatbed for routing the service cable on them.

Preferably it has a two-axle chassis.

Preferably, the reusable service cable is wound on the reel.

Preferably, the electrical outlets mounted in it are preferably arranged at four corners of the flatbed, or at least one of them is placed in the rear part of the flatbed.

Preferably has at least one wire guide, which constitutes a wire guide with brushes.

Preferably, under its reel, is laying the coiling mechanism, preferably with electrical drive, and the coiler machine is usually controlled by a wireless remote control, respectively powered by the battery or generator, and preferably provided with a self-cleaning device from the cable dirt arising during the winding of the cable on the reel.

Preferably, its service poles are single-piece poles or several-piece poles, preferably two-piece poles which preferably are also equipped with a base.

Preferably, its service poles are made of polyester fibers, glass fibers, basalt fibers, polyester resins, epoxy resins, powdered glass, or relatively of composite, ie. a material having a heterogeneous structure composed of two or more mentioned components with slightly different properties.

Preferably, the set of elements forming the grid base of the pole has been placed in the floor of its flatbed.

Preferably, it is equipped with an overrun brake.

Preferably, the housing of the wiring compartment is preferably made of aluminum sheet powder coated and is preferably equipped with dual-socket connectors for universal cable.

Preferably, its unstapling cable sheet made of steel cords, and preferably to the sheet is adapted a regulatory connector for connecting the sheet to the hook and to adjust the tension of the cable.

Preferably, its hooks are hot galvanized steel hook bolts, while the suspension clamps are metal clamps, die-cast with assembly rollers and a rubber insert, adapted to the insulated universal cable.

Preferably, its rollers are equipped with aluminum wheels on roller bearings and are suitable for hanging insulated universal cable.

Preferably, has earthing probes and earthing wires of galvanized steel bar with a control clamp and earthing wire in insulation, ending on one side in ring cable lug, whereas preferably they are wound on the reel.

The advantage of the developed device is its universality and optimum adaptation to different conditions in which the power lines repairs are made.

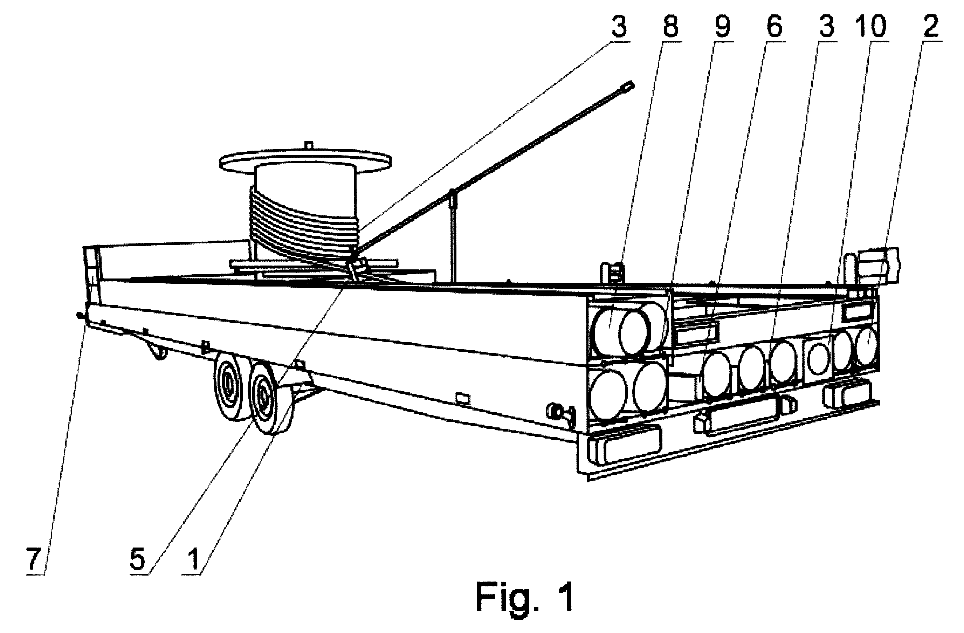

The subject of the invention has been described more particularly on the accompanying drawing.

As shown on the drawing, the main element of the developed service vehicle is a two-axle chassis 1, on which is placed the flatbed 2, which is fitted with a number of fastened permanently, relatively connected with her separately, relatively components and elements freely located on it. These are mainly: ultralight, service poles 3 (also referred to as rods, or composite rods), reusable service cable 4 and wiring compartment 5. Reusable service cable 4 is wound on a reel, under which there is a coiling mechanism with electrical drive, whereas the coiling machine is controlled, for example, by a wireless remote control, powered respectively by a generator relatively by a battery and equipped with a cable self-cleaning device from the dirt generated during winding the cable on the reel. However, in the flatbed 2 are placed: unstapling steel sheet, hooks, suspension clamps, earthing probes, earthing wires and electrical outlets mounted preferably at four corners of the flatbed 2 of the vehicle, of which at least one is preferably arranged in the rear part of the vehicle. In the flatbed 2 is also placed the battery or generator. In it are also located small fittings, for example, lashings, rollers, tools, and lighting mast, as well as the kevlar service lashing. The lighting mast allows the lighting of the work area by floodlights situated on a retractable mast.

In flatbed 2 are incorporated the wire guides 6, allowing routing on them the service cable 4 in orderly manner, and out of which at least one is the wire guide 6a with brushes.

Service poles 3 may be a single-piece or several-pieces, preferably two-pieces service poles 3a, they also can be fitted with a base and may constitute service poles 3b, as poles non-interfering in the ground.

Service poles 3 are made of polyester fibers, glass fibers, basalt fibers, polyester resins, epoxy resins, powdered glass, or relatively of composite, ie. a material having a heterogeneous structure composed of two or more mentioned components with slightly different properties.

The whole set of elements forming the grid base of the pole have been placed in the floor of the flatbed 2 of the vehicle.

The vehicle structure is preferably completely galvanized. It is also equipped with an overrun brake.

The housing of the wiring compartment 5 is preferably made of aluminum sheet powder coated and is equipped most preferably with a dual-socket connector for universal cable.

The unstapling cable sheet made of steel cords along with two cords used for its stapling is adapted for universal cable mounting and tension. To the sheet it is adapted a regulatory connector for connecting the sheet with the hook and to adjust the tension of the cable.

The hooks are hot galvanized steel hook bolts. Whereas, the suspension clamps, are metal clamps, die-cast with assembly rollers and a rubber insert, adapted to the insulated universal cable.

The rollers are equipped with aluminum wheels on roller bearings and are suitable for hanging insulated universal cable.

The earthing probes and earthing wires of galvanized steel bar with a control clamp and earthing wire in insulation, on one side ended with ring cable lug. They may be wound on the reel.

### List of elements:

1. two-axle chassis;
2. flatbed (of the vehicle);
3. service poles;
4. service cable (reusable);
5. wiring compartment;
6. wire guide.

## Claims

1. Service vehicle with a chassis and a flatbed placed on it, **characterized in that**, it is equipped with at least some of its fixed permanently, or connected to it separately, relatively components and elements freely located on it, which are: ultra-light, service poles (3), reusable service cable (4) and wiring compartment (5), unstapling steel sheet, hooks, handles through, earthing probes, earthing wires and electrical outlets, battery or generator, as well as small fittings: lashings, rollers, tools, lighting mast, Kevlar service lashing, and also wire guides (6) incorporated in the flatbed (2) for routing the service cable (4) on them.

2. Service vehicle according to claim 1, **characterized in that**, it has a two-axle chassis(1).

3. Service vehicle according to claim 1 or 2, **characterized in that**, its reusable service cable (4) is wounded on a reel.

4. Service vehicle according to claim 1 or 2 or 3, **characterized in that**, the mounted in it electrical outlets most preferably are arranged at four corners of the flatbed (2), or at least one of them is placed in the rear part of the flatbed (2).

5. Service vehicle according to Clair 1 or 2 or 3 or 4. **characterized in that**, it has at least one wire guide (6), which constitutes wire guide (6a) with brushes.

6. Service vehicle according to one of the claims from 1 to 5, **characterized in that**, under the reel is laying the coiling mechanism, preferably with electrical drive, and the coiler machine is usually controlled bya wireless remote control, respectively powered by the battery or generator and preferably provided with z self-cleaning device for the cable dirt arising during the winding of the cable on the reel.

7. Service vehicle according to one of the claims from 1 to 6, **characterized in that**, its service poles (3) are one-piece poles or several-pieces poles, preferably two-pieces poles which are preferably also equipped with a base.

8. Service vehicle according to one of the claims from 1 to 7, **characterized in that**, its service poles (3) are made of polyester fibers, glass fibers, basalt fibers, polyester resins, epoxy resins, powdered glass, or relatively of composite, ie. a material having a heterogeneous structure composed of two or more mentioned components with slightly different properties.

9. Service vehicle according to one of the claims from 1 to 8, **characterized in that**, the set of elements forming the grid base of the pole has been placed in the floor of its flatbed (2).

10. Service vehicle according to one of the claims from 1 to 9, **characterized in that**, it is equipped with an overrun brake.

11. Service vehicle according to one of the claims from 1 to 10, **characterized in that**, the housing of the wiring compartment (5) is most preferably made of aluminum sheet powder coated and is preferably equipped with dual-socket connectors for universal cable.

12. Service vehicle according to one of the claims from 1 to 11, **characterized in that**, its unstapling cable sheet made of steel cords, and preferably to the sheet is adapted a regulatory connector for connecting the sheet to the hook and to adjust the tension of the cable,

13. Service vehicle according to one of the claims from 1 to 12, **characterized in that**, its hooks constitute hot galvanized steel hook bolts, while the suspension clamps ate metal clamps, die-cast with assembly rollers and a rubber insert, adapted to the insulated universal cable.

14. Service vehicle according to one of the claims from 1 to 13, **characterized in that**, its rollers are equipped with aluminum wheels on roller bearings and are suitable for hanging insulated universal cable.

15. Service vehicle according to one of the claims from 1 to 14, **characterized in that**, it has earthing probes and earthing wires made of galvanized steel bar with a control clamp and an earthing wire in insulation, on one side ended with ring cable lug, whereas preferably they are wound on a reel.
